# EUROPEAN PATENT SPECIFICATION

(11) **EP 0 456 002 B1**
(45) Date of publication and mention of the grant of the patent: **06.11.1996**
(21) Application number: 91105797.4
(22) Date of filing: 11.04.1991
(51) Int. Cl.: G01T 1/202

(54) **Single crystal scintillator and apparatus for prospecting underground strata using same**
Vorrichtung zur Bestimmung der Eigenschaften von Erdformationen mittels einzelner Szintillationskristalldetektoren
Détecteur de scintillation monocristal pour l'exploration de couches géologiques

(30) Priority: 20.04.1990 JP 106292/90
(43) Date of publication of application: 13.11.1991
(73) Proprietor: Hitachi Chemical Co., Ltd., Shinjuku-ku, Tokyo 160 (JP)
(72) Inventor: Akiyama, Seikichi, Mito-shi (JP); Utsu, Takeshi, Hitachi-shi (JP); Ishibashi, Hiroyuki, Hitachi Matsushiro Hausu 402, Tsukuba-shi (JP); Melcher, Charles L., West Redding, Connecticut 06896 (JP); Schweitzer, Jeffrey S., Ridgefield, Connecticut 06877 (JP)
(74) Representative: Kraus, Walter, Dr.

(56) References cited:
- EP-A- 0 231 693
- FR-A- 2 634 028
- US-A- 4 647 781
- DATABASE WPIL Week 895, Derwent Publications Ltd., London, GB; AN 89-035003 & JP-A-63 307 380

## Description

### BACKGROUND OF THE INVENTION

This invention relates to a single crystal scintillator widely used in fields of radiotherapeutics, physics, biology, chemistry, mineralogy, exploration for oil, etc., e.g. positron CT (computed tomography) for medical diagnosis, or for measuring cosmic rays or detecting underground resources.

Since a single crystal scintillator of thalium doped sodium iodide [NaI(Tl)], which has been widely used as a radiation detector, is relatively low in production cost and gives high light output in response to radiation, it is used, instead of a Geiger-Müller counter, for many applications including high energy physics studies and as a tool for exploring oil reservoirs. But it has many defects in that efficiency of radiation detection is low due to the small density of NaI(Tl), which results in making an apparatus large, radiation counting ability is lowered due to a long decay time of fluorescence and afterglow, which results in causing blurring or merging of fluorescence signals, and handling under high temperatures and high humidity is difficult due to deliquescence. In order to overcome these defects, there appeared a scintillator of bismuth germanate Bi₄Ge₃O₁₂ (hereinafter referred to as "BGO"). The BGO sintillator is large in density and high in radiation absorption rate, but has defects in that light output is low and fluorescence decay time is long. In order to overcome these defects, Japanese Patent Examined Publication No. 61-8472 proposes a single crystal scintillator of cerium doped gadolinium silicate [Gd₂SiO₅:Ce] (hereinafter referred to as "GSO"). But the GSO scintillator has a peak wavelength of luminescence of 430 nm, which is not within the wavelength range of 380 nm to 420 nm, the maximum spectral sensitivity of a photomultiplier tube having a bi-alkali photocathode, commonly used in combination with these scintillators, so that light-electricity conversion is not optimum. On the other hand, U. S. Patent No. 4,883,956 proposes to use a GSO single crystal scintillator in an apparatus for prospecting underground layers. But performance of this apparatus is not most suitable due to properties of GSO, e.g. fluorescence output is relatively small, decay time is relatively bong (60 ns), and luminescence wavelength is relatively long.

In positron CT or various radiation measuring instruments, in order to make a single crystal scintillator detect sufficient radiation and to make the apparatus smaller in size, the radiation absorption rate of the single crystal scintillator should be large in radiation absorbing rate. Further, since performance of apparatus and devices depends on the largness of fluorescence output, it is necessary to make the fluorescence output large in order to improve the S/N ratio (fluorescence output/noise ratio) of images in an image treating apparatus. Moreover, it is necessary to reduce the decay time in order to improve the counting rate performance which is influenced by pulse pile-up. In addition, in order to use the fluorescence output effectively, it is better to match the wavelength of the photomultiplier tube showing the maximum spectral sensitivity with the luminescence wavelength of single crystal scintillator. For such a purpose, it is necessary to improve the luminescence wavelength of known single crystal scintillators.

US 4 647 781 relates to a gamma ray detector suitable for use in a positron CT and others which comprises a scintillator formed of a single crystal of cerium activated gadolinium silicate which is expressed by a general formula Gd_{2(1-x-y)}Ln₂ₓCe_{2y}SiO₅ (where Ln indicates at least one element selected from a group consisting of yttrium and lanthanum, and x and y lie in ranges given by formulae 0≤x≤0.5 and 1x10⁻³≤y≤0.1).

FR-A-2 634 628 relates to lanthanide silicate single crystal scintillators for the detection of X-rays having the following formula:

(Ln₁₋ₓ₁₋ₓ₂₋ₓ₃Ln'ₓ₁Ceₓ₂Tbₓ₃)_{9.33}(SiO₄)₆O₂,

wherein Ln and Ln', which are different, represent an element selected from La, Gd, Yb and Lu, and wherein x₁, x₂ and x₃ have the following values:

0≤x₁<1

0≤x₂≤0.05

0≤x₃≤0.05

0<x₂+x₃≤0.1

0<x₁+x₂+x₃<1

DATABASE WPIL, Week 895, Derwent Publications Ltd., London, GB; AN 89-0335003 & JP-A-63 307 380, December 1988 discloses the following radiant ray detector:

Gd₂₍₁₋ₓ₎RE₂ₓSiO₅ (x ^{.} 10⁻⁶ to 10⁻²).

wherein RE is at least one rare metal, the amount of which is 0.02 at most.

### SUMMARY OF THE INVENTION

It is an object of the present invention to provide a single crystal scintillator and an apparatus for prospecting underground strata using the same solving the above-mentioned problems and having a luminescence wavelength in good agreement with the wavelength showing the maximum spectral sensitivity of a photomultiplier tube having a bi-alkali photocathode.

The present invention provides a single crystal scintillator comprising a cerium doped gadolinium silicate compound represented by the formula:

Gd_{2-(x+y)}LuₓCe_{y}SiO₅

x is a value between 0.03 and 1.9; and y is a value between 0.001 and 0.2.

The present invention also provides an apparatus for prospecting underground strata comprising a prospecting element movable in a hole, a detecting means containing the single crystal scintillator mentioned above for detecting radiation and carried by said prospecting element, and a combining means for generating and recording signals displaying at least one of characteristics of radiation detected by said detecting means.

### BRIEF DESCRITPION OF THE DRWINGS

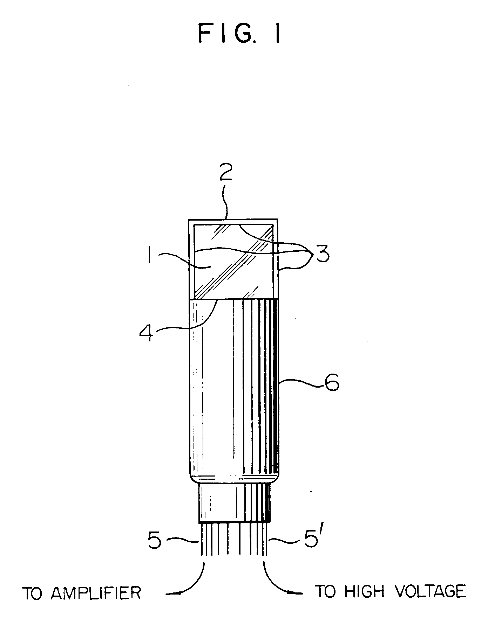

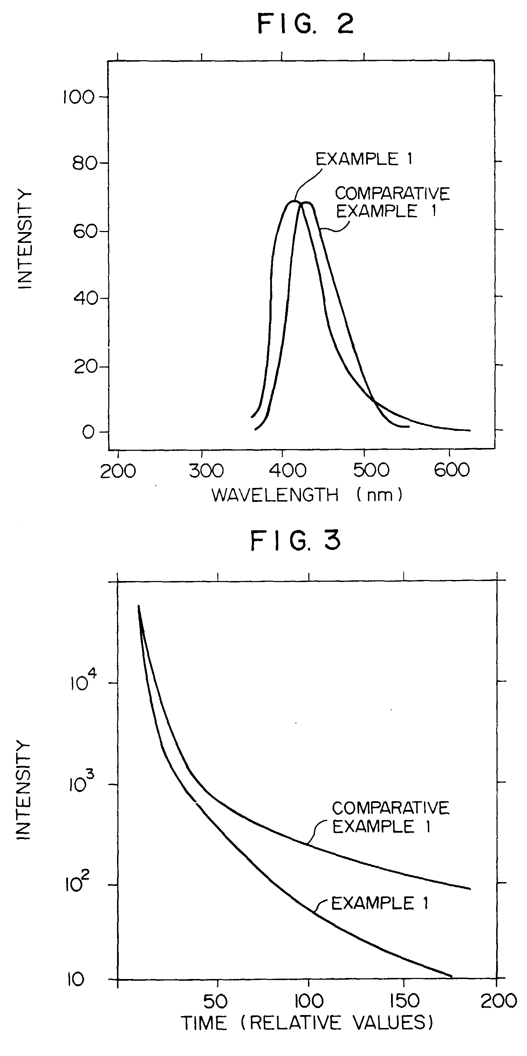

Fig. 1 is a schematic view showing a structure of an apparatus for prospecting subsurface earth formations using the single crystal scintillator of the present invention. Figs. 2 and 3 are graphs showing the luminescence wavelength distribution and the fluorescence decay properties of the single crystal scintillator of the present invention.

### DESCRIPTION OF THE PREFERRED EMBODIMENTS

The present inventors have studies relationships between single crystal compositions, cerium concentration and single crystal scintillator properties and found that it is effective to substitute a part of the gadolinium with an element having a smaller ionic radius than that of the gadolinium in order to obtain a single crystal scintillator having a luminescence wavelength near the wavelength showing the maximum spectral sensitivity of the photomultiplier tube.

The single crystal scintillator of the present invention comprises a cerium doped gadolinium silicate compound represented by the formula:

Gd_{2-(x+y)}LuₓCe_{y}SiO₅

wherein
x is a value between 0.03 and 1.9; and y is a value between 0.001 and 0.2.

In the present invention, when the value of y in the above-mentioned general formula is less than 0.001, the fluorescence output becomes small, while when y is more than 0.2, the crystals are colored slightly which worsens the light transmittance. The value of y in the range of 0.003 to 0.02 is preferable, since the fluorescence output becomes the largest. On the other hand, when the value of x is less than 0.03, the luminescence wavelength of the single crystal scintillator is shifted from the wavelength showing the maximum spectral sensitivity of photomultiplier tube. When x is more than 1.9, crystals of good quality cannot be obtained. Preferable value of x is in the range of 0.1 to 0.7 wherein crystals of best quality can be obtained.

The use of Lu as the element Ln is preferable, since the luminescence wavelength of the resulting single crystal comes closest to the wavelength of the maximum spectral sensitivity of the photomultiplier tube.

The single crystal of the present invention can be produced by a conventional process such as the Czochralski method or the like. Since the melting point of cerium doped gadolinium silicate compound is high, about 1900°C, a crucible made of iridium or the like is used. The number of revolutions, the atmospheric gas and the like are selected properly depending on conditions, and there is no particular limitation thereto. Since iridium vaporizes rapidly when exposed to high temperature in air, an inert gas is used when a crubible made of iridium is used.

The above-mentioned single crystal scintillator is effective when used in an apparatus for prospecting underground strata, particularly oil and the like. The apparatus for prospecting underground strata of the present invention comprises a prospecting element equipped with a radiation detecting means and a combining means for converting the detected light to signals and recording them. The detecting means comprises a single crystal scintillator, a container, a reflective material, a photomultiplier tube, and the like. The single crystal scintillator is housed in a container which can transmit radiation such as gamma-rays. One surface of the single crystal scintillator is connected to the photomultiplier tube and another surface is covered with polytetrafluoroethylene, barium sulfate powder, magnesium oxide powder, aluminum foil, titanium oxide paint, or the like as the reflective material to collect the generated light on the connecting surface to the photomultiplier tube as much as possible. The single crystal scintillator can directly be connected to the photomultiplier tube or can be connected to the photomultiplier tube via a light guide tube, an optical fiber, a lens, a mirror, etc. The photomultiplier tube is further connected with a an amplifier, a recorder, etc. used as the combining means by a conventional method.

Reasons for shortening luminescence wavelength by partly substituting the gadolinium with an element having a smaller ionic radium than that of gadolinium seems to be as follows. The intensity of the crystal field influencing cerium ions which are a luminescence center is determined by the gadolinium or another element substituting for a part of the gadolinium around the cerium ions. That is, when the elements around cerium ions are changed from gadolinium to an element having a smaller ionic radius than gadolinium, the ionic space of the cerium ions is enlarged. Thus, the intensity of the crystal field of the cerium ions therearound seems to be weakened. The luminescence of cerium ions is based on the energy transfer from the 5d energy level to the 4f energy level. The 5d energy level in a crystal is split depending on the intensity of the crystal field, and the size of the energy gap relating to the emission transition becomes smaller when the intensity of crystal field becomes stronger. Therefore, when the crystal field is weak, the energy gap is relatively large. When the energy gap relating to the emission transition becomes larger, the energy of the released photons becomes large. Therefore, the luminescence wavelength becomes short.

As mentioned above, by substituting a part of the gadolinium with another element Ln, the luminescence wavelength of the single crystal seems to move near the wavelength corresponding to the maximum spectral sensitivity of a bi-alkali photomultiplier tube.

The present invention is illustrated by way of the following Examples.

### Example 1

Oxide starting materials of Gd₂O₃, Lu₂O₃, CeO₂ and SiO₂, each having a purity of 99.99 to 99.999%, were mixed to give a composition of

Gd_{1.495}Lu_{0.5}Ce_{0.005}SiO₅

(hereinafter referred to as "LuGSO"). The mixture weighing 450 g was placed in a crucible made of iridium (diameter 50 mm, height 50 mm), and heated at about 1900°C in a nitrogen atmosphere by high frequency heating. A single crystal growth was carried out by the Czochralski method at a crystal pulling rate of 1 mm/hr and revolution of 35 r.p.m.

A seed crystal was immersed in the melt having a surface temperature of 1890°C (measured by using a pyrometer) and gradually pulled up while revolving to grow a single crystal under the seed crystal. As a result, a single crystal having a diameter of about 25 mm, a length of about 60 mm, and a weight of about 300 g was obtained. The single crystal was colorless and transparent.

### Comparative Example 1

Oxide starting materials of Gd₂O₃, and CeO₂ and SiO₂, each having a purity of 99.99 to 99.999%, were mixed to give a composition of

Gd_{1.995}Ce_{0.005}SiO₅

(hereinafter referred to as "GSO"). The mixture weighing 450 g was placed in a crucible made of iridium and the crystal grown by the Czochralski method in a nitrogen atmosphere in the same manner as described in Example 1. The GSO single crystal obtained was colorless and transparent.

Each sample had a size of 10 x 10 x 10 (mm) after being cut from the single crystals obtained in Example 1 and Comparative Example 1 and polished to obtain a mirror-like surface. The luminescence wavelength was measured. The light output was measured by using ¹³⁷Cs as a radiation source. For a photomultiplier tube, R878 manufactured by Hamamatsu Photonics Co. was used.

The results of measurements and other properties are shown in Table 1 and Figs. 2 and 3. Fig. 2 shows the luminescence wavelength distribution and Fig. 3 shows the scintillation decay properties.

**Table 1**

| Example No. | Example 1 | Comparative Example 1 |
|---|---|---|
| Light output | 2 | 1 |
| Decay time (ns) | 30 | 60 |
| Luminescence wavelength (nm) | 416 | 430 |
| Density (g/cm³) | 7.0 | 6.7 |
| Hygroscopicity | None | None |

As is clear from Table 1 and Figs. 2 and 3, the luminescence wavelength of LuGSO of Example 1 is 416 nm and shifted to the shorter wavelength side compared with the known GSO (Comparative Example 1) of 430 nm. By doing this, suitability to the spectral sensitivity of a bi-alkali photomultiplier tube becomes improved. Thus, detection of radiation can be carried out advantageously. Further, LuGSO is twice as fast as in decay time. In addition, LuGSO is twice as high as in the light output and larger in density compared with the known GSO. Moreover, LuGSO does not show hydroscopicity unlike NaI(Tl) and shows good results.

### Example 2

One example of the apparatus for prospecting underground layers (or subsurface earth formations) of the present invention is explained below.

Fig. 1 shows a detecting means of radiation incorporated into a prospecting element movable in a hole digged in a stratum. In Fig. 1, numeral 1 denotes the single crystal scintillator of the present invention housed in a container 2 made of aluminum and capable of transmitting gamma-rays. One terminal surface 4 of the scintillator 1 is optically combined with a photosensitive surface of a photomultiplier tube 6. Another terminal surface 3 of the scintillator 1 is covered with a barium sulfate powder as a reflective agent. The scintillator 1 emits a light depending on an incident amount of gamma-rays. The emitted light is reflected directly or by the reflective agent to enter into the photomultiplier tube 6, wherein the entered light is converted to electric signals, which are lead to a pulse height amplifier via a lead wire 5 as shown by an arrow. followed by display and recording. On the other hand, the photomultiplier tube 6 is connected to a high voltage electric source via a lead wire 5' as shown by an arrow.

The single crystal scintillator of the present invention has strong emission at the wavelength showing the maximum spectral sensitivity of a bi-alkali photomultiplier tube compared with known GSO single crystal scintillators. Further, the light output and decay time are excellent compared with known GSO single crystal scintillators. Especially, LuGSO which substitutes lutetium in place of a portion of the gadolinium in GSO has twice the light output and half the decay time as known GSO.

Therefore, the single crystal scintillator of the present invention exceeds known GSO single crystal scintillators in many properties important for use as a gamma-ray detector, e.g. light output, energy resolution, efficiency of detection of high energy photons, scintillator decay time, emission spectrum match to photomultiplier tube response, etc.

Thus, the single crystal scintillator of the present invetnion can be suitably used in positron CT and various radiation measuring devices, especially apparatus used in the investigation of subsurface earth formations.

## Claims

1. A single crystal scintillator comprising a cerium doped gadolinium silicate compound represented by the formula:
Gd_{2-(x+y)}LuₓCe_{y}SiO₅
wherein
x is a value between 0.03 and 1.9; and y is a value between 0.001 and 0.2.

2. A single crystal scintillator according to Claim 1, wherein x is a value between 0.1 and 0.7.

3. A single crystal scintillator according to Claim 1 or 2, wherein y is a value between 0.003 and 0.02.

4. An apparatus for prospecting underground strate comprising a prospecting element movable in a hole, a detecting means containing the single crystal scintillator of Claim 1, 2 or 3 for detecting radiation and carried by said prospecting element, and a combining means for generating and recording signals displaying at least one of characteristics of radiation detected by said detecting means.

5. An apparatus according to Claim 4, wherein the detecting means is a photodetector combined with a scintillator and converting a light emitted from said scintillator to electric signals.

6. A single crystal scintillator according to any one of Claims 1 to 3, wherein said scintillator emits light dependent on an incident amount of γ-rays.

## Patentansprüche

1. Einkristall-Scintillator, umfassend eine Cer-dotierte Gadolinium-Silicat-Verbindung, entsprechend der Formel:
Gd_{2-(x+y)}LuₓCe_{y}SiO₅
worin x ein Wert zwischen 0,03 und 1,9 ist; und y ein Wert zwischen 0,001 und 0,2 ist.

2. Einkristall-Scintillator nach Anspruch 1, worin x ein Wert zwischen 0,1 und 0,7 ist.

3. Einkristall-Scintillator nach Anspruch 1 oder 2, worin y ein Wert zwischen 0,003 und 0,02 ist.

4. Vorrichtung zur Prospektierung von Erdformationen, umfassend ein Prospektierelement, das in einem Loch beweglich ist, einem Detektor, der den Einkristall-Scintillator nach Anspruch 1, 2 oder 3 zum Nachweis von Strahlung enthält, und der von dem Prospektierelement getragen wird, und eine verbindende Vorrichtung zur Erzeugung und Aufzeichnung von Signalen, die mindestens eine der Strahlungseigenschaften, die von dem Detektor nachgewiesen werden, aufweist.

5. Vorrichtung nach Anspruch 4, worin der Detektor ein mit einem Scintillator kombinierter Photodetektor ist und emittiertes Licht aus dem Scintillator in elektrische Signale umwandelt.

6. Einkristall-Scintillator nach einem der Ansprüche 1 bis 3, worin der Scintillator Licht in Abhängigkeit der einfallenden Menge an γ-Strahlen emittiert.

## Revendications

1. Scintillateur monocristallin contenant un composé de type silicate de gadolinium dopé au cérium, représenté par la formule :
Gd_{2-(x+y)}LuₓCe_{y}SiO₅
dans laquelle x est un nombre valant entre 0,003 et 1,9, et y est un nombre valant entre 0,001 et 0,2.

2. Scintillateur monocristallin conforme à la revendication 1, dans lequel x vaut entre 0,1 et 0,7.

3. Scintillateur monocristallin conforme à la revendication 1, dans lequel y vaut entre 0,003 et 0,02.

4. Appareil servant à explorer des couches géologiques, qui comporte un élément prospecteur que l'on peut faire bouger dans un puits, un dispositif détecteur contenant un scintillateur monocristallin conforme à la revendication 1, 2 ou 3, servant à détecter un rayonnement et porté par l'élément prospecteur, et une combinaison de dispositifs servant à engendrer et à enregistrer des signaux qui matérialisent au moins l'une des caractéristiques du rayonnement détecté par le dispositif détecteur.

5. Appareil conforme à la revendication 4, dans lequel le dispositif détecteur est un photodétecteur qui est associé à un scintillateur et qui convertit en signaux électriques la lumière émise par le scintillateur.

6. Scintillateur monocristallin conforme à l'une des revendications 1 à 3, qui émet une lumière en fonction de la quantité de rayonnement gamma incident.
